# EUROPÄISCHE PATENTSCHRIFT

(11) **EP 0 728 300 B1**
(45) Veröffentlichungstag und Bekanntmachung des Hinweises auf die Patenterteilung: **13.06.2001**
(21) Anmeldenummer: 95932684.4
(22) Anmeldetag: 07.09.1995
(51) Int. Cl.: G01M 1/06

(54) **WUCHTMASCHINE**
BALANCING MACHINE
MACHINE D'EQUILIBRAGE

(30) Priorität: 08.09.1994 DE 4432025
(43) Veröffentlichungstag der Anmeldung: 28.08.1996
(73) Patentinhaber: Beissbarth GmbH, 80993 München (DE)
(72) Erfinder: BUX, Hermann, D-82343 Pöcking (DE); ROSS, Peter, D-80992 München (DE)
(74) Vertreter: Kirschner, Klaus Dieter, Dipl.-Phys.
(86) Internationale Anmeldenummer: EP9503518
(87) Internationale Veröffentlichungsnummer: WO9607881

(56) Entgegenhaltungen:
- EP-A- 0 584 560
- WO-A-94/19864
- US-A- 4 046 017
- SOVIET INVENTIONS ILLUSTRATED Week 8349 25.Januar 1984 Derwent Publications Ltd., London, GB; AN 83-838210 & SU,A,998 887 (KRUPNIK V I) , 23.März 1983
- S. JORDAN: "Geregelte elektrische Antriebe für die Fertigungsautomatisation", , VERLAG MODERNE INDUSTRIE, LANDSBERG/LECH

## Beschreibung

Die Erfindung bezieht sich auf eine Wuchtmaschine zum Auswuchten eines Rades, mit einer Antriebseinrichtung, die einen Motor (8) und eine von dem Motor angetriebene Auswuchtwelle umfaßt, auf der das Rad zum Messen der Unwucht befestigt ist, einem Unwuchtsensor zur Messung der Unwucht und einer Drehzahlregeleinrichtung zur Regelung der Geschwindigkeit der Antriebseinrichtung.

Es ist bekannt, beim Auswuchten eines Rades, insbesondere eines Kraftfahrzeugrades, eine Wuchtmaschine zu verwenden, bei welcher das auszuwuchtende Rad auf einer Welle drehbar gelagert ist. Die Welle ist mit einem Sensor gekoppelt, der beim Drehen des Rades die Unwuchtkräfte detektiert. Der Sensor ist mit einem Rechner verbunden, der aus den Ausgangssignalen des Sensors in Verbindung mit den radspezifischen Daten die Unwuchtdaten ermittelt. Eine derartige Wuchtmaschine, die der eingangs erwähnten Wuchtmaschine entspricht, ist aus der US-A-4,046,017 bekannt. Bei dieser Wuchtmaschinen ist der Wuchtlaufvorgang immer gleich, wobei die Drehzahl der Welle mit dem Rad auf eine vorgegebene Drehzahl hochgefahren und dann wieder abgebremst wird.

Aus der EP 0 584 560 A1 ist eine Vorrichtung zum Antreiben eines zur Unwuchtmessung freidrehbaren, angehobenen, an einem Kraftfahrzeug montierten Kraftfahrzeugrad mittels eines von einem Elektromotor angetriebenen Friktionsrades bekannt. Das Friktionsrad wird mit unterschiedlichen Andrückkräften an den Luftreifen des Kraftfahrzeugrades angedrückt, derart, daß der Schlupf zwischen dem Kraftfahrzeugrad und dem Friktionsrad innerhalb vorgegebener Grenzen gehalten wird. Mit anderen Worten wird die Drehzahl des Friktionsrades in Abhängigkeit von dem Schlupf zwischen dem Friktionsrad und dem Kraftfahrzeugreifen geregelt.

Ein Nachteil der bekannten Wuchtmaschinen ist es, daß der Wuchtlaufvorgang immer in der gleichen Weise abläuft und nicht an verschiedene Anforderungen wie beispielsweise hohe Auswuchtqualität oder kurze Meßdauer angepaßt werden kann.

Die Aufgabe der Erfindung ist es, den Betrieb einer Wuchtmaschine gemäß den jeweiligen Anforderungen bezüglich Auswuchtqualtität und Meßdauer zu optimieren.

Die Aufgabe wird gelöst bei einer Wuchtmaschine der eingangsgennannten Art, die dadurch gekennzeichnet ist, daß die Drehzahlregeleinrichtung einen steuerbaren Frequenzumrichter und einen Rechner zur Regelung des steuerbaren Frequenzumrichters umfaßt, und daß die Drehzahlregeleinrichtung geeignet ist, die-Drehzahl die Auswuchtwelle in Abhängigkeit von einer gewählten Auswuchtqualität zu regeln, wobei, wenn die Dauer des Auswuchtvorganges kurz gehalten werden soll, die Auswuchtwelle bei niedrigen Drehzahlen anzutreiben ist, und wenn die Auswuchtqualität hoch sein soll, das Rades mit großer Drehzahlen anzutreiben ist, um ein hohes Ausgangssignal des Unwuchtsensors zu erhalten.

Erfindungsgemäß kann das Rad für den Wuchtlauf mit verschiedenen Drehzahlen angetrieben werden. Dadurch kann der Wuchtlauf beispielsweise auf eine kurze Dauer des Auswuchtvorganges oder einer hohe Auswuchtqualität mit hoher Meßgenauigkeit optimiert werden. Soll die Dauer des Auswuchtvorganges kurz gehalten werden, so kann erfindungsgemäß die Welle bei niedrigen Drehzahlen angetrieben werden, was kurze Hochlauf- und Bremszeiten mit sich bringt. Steht jedoch die Auswuchtqualität im Vordergrund, dann sind große Drehzahlen des Rades erforderlich, um ein hohes Ausgangssignal des Unwuchtsensors zu erhalten.

In Hinsicht auf die Dauer des Auswuchtlaufes erlaubt die Erfindung zudem in einer vorteilhaften Ausrührungsform, daß das Rad nach Beendigung des Wuchtlaufes automatisch (motorisch) in die Ausgleichsposition zum Anbringen der Ausgleichsgewichte eingedreht und festgehalten wird. Dadurch entfällt das bisher übliche manuelle Eindrehen des Rades.

Die rechnergesteuerte Drehzahlregeleinrichtung kann vorteilhaft auch auf andere Antriebsmotoren in der Unwuchtmachine angewendet werden, beispielsweise für ein motorisch abgetriebenes Öffnen und Schließen eines Radschutzbogens oder einer motorisch angetriebenen Einrichtung zum Ermitteln der radspezifischen Daten und/oder Anbringen von Ausgleichsgewichten.

In der bevorzugten Ausführungsform überwacht der Rechner außerdem die Stromaufnahme des Motors bzw. der Motoren und schaltet sie notfalls ab.

Weitere vorteilhafte Ausführungsformen sind in den abhängigen Ansprüchen gekennzeichnet.

Die Erfindung wird im folgenden anhand einer bevorzugten Ausführungsform mit Bezug auf die begleitende Zeichnung beschrieben, in welcher ein Blockdiagramm einer Drehzahlregeleinrichtung für eine Wuchtmaschine gemäß der Erfindung gezeigt ist.

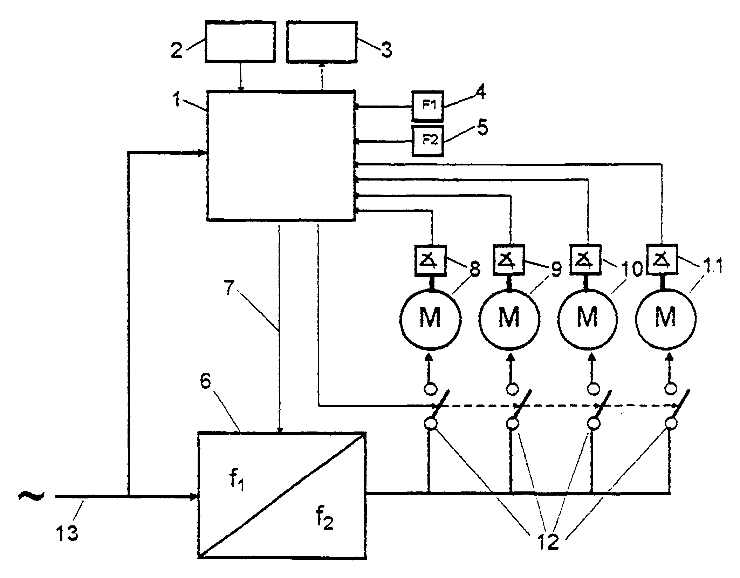

Die Zeichnung zeigt einen Rechner 1, der mit einer Eingabeeinheit 2 und einer Ausgabeeinheit 3 versehen ist. Zwei elektrische Unwuchtsensoren 4 und 5, die mit der Auswuchtwelle (nicht gezeigt) gekoppelt sind, geben ihre Ausgangssignale an den Rechner 1. Der Rechner 1 ist parallel zu einem Frequenzumrichter 6 an einer Netzversorgungsspannung 13 angeschlossen und steuert über die Steuerleitung 7 den Frequenzumrichter 6. Mehrere Motoren 8 - 11 mit Positionsmeldern sind über den Frequenzumrichter 6 und jeweiligen Schaltern 12 an der Netzversorgungsspannung angeschlossen. Die Ausgänge der Positionsmelder werden über jeweilige Leitungen dem Rechner 1 zugeführt.

In der gezeigten Ausführungsform sind mehrere Motoren parallel geschaltet, wobei nur der Motor 8 dem Antrieb der Auswuchtwelle dient. Von den übrigen Motoren ist Motor 9 zum motorischen Öffnen und Schließen des Radschutzbogens vorgesehen; Motor 10 treibt eine Abtasteinrichtung oder dergleichen (nicht gezeigt) zur Ermittlung der radspezifischen Daten an; und Motor 11 dient dem automatischen Anbringen von Ausgleichsgewichten.

Im Betrieb wird die Ausgangsfrequenz, die Ausgangsspannung und der Ausgangsstrom des Frequenzumrichters 6 über eine geeignete Schnittstelle vom Rechner aus gesteuert. Der Ausgang des Frequenzumrichters wird auf die verschiedenen Motoren mittels einer geeigneten Umschalteinrichtung 12 geschaltet. Auf diese Weise steuert der Rechner 1 die Drehzahl der Motoren über den Frequenzumrichter 6.

Beim Antreiben der Motoren wird der Frequenzumrichter derart gesteuert, daß dessen Ausgangsfrequenz langsam steigt und beim Bremsen der Motoren langsam sinkt, so daß ein Sanftanlauf und ein Sanftbremsen stattfindet. Durch den Rechner kann die Ausgangsfrequenz des Frequenzumrichters weiterhin derart gesteuert werden, daß beim Unwuchtlauf die Auswuchtwelle in Abhängigkeit von einer gewählten Auswuchtqualität mit unterschiedlichen Drehzahlen angetrieben wird.

Zur Eindrehung des Rades für die Anbringung der Ausgleichsgewichte steuert der Rechner über den Frequenzumrichter den Motor 8 in Abhängigkeit von der Winkellage der Auswuchtwelle in der Weise, daß die Auswuchtwelle motorisch in die Ausgleichsposition eingedreht und festgehalten wird. Die Ausgleichsgewichte können dann mit Hilfe einer Anbringeinrichtung (nicht gezeigt), die vom Motor 11 angetrieben wird, automatisch angebracht werden.

Das Anbringen der Ausgleichsgewichte kann sequentiell erfolgen, wobei das Rad automatisch zunächst auf eine Ausgleichsposition eingedreht wird und der Benutzer das entsprechende Ausgleichsgewicht anbringt und dies der Machine bestätigt. Danach wird das Rad automatisch auf die nächste Anbringposition gedreht usw. Wird auch das Anbringen der Ausgleichsgewichte automatisch durchgeführt, entfällt die Beteiligung des Benutzers.

Der Rechner gibt dem Frequenzumrichter eine maximale Stromaufnahme der Motoren vor und überwacht ständig die Stromaufnahme, wobei beim Überschreiten der maximal zulässigen Stromaufnahme eine Notabschaltung der Motoren erfolgt.

## Patentansprüche

1. Wuchtmaschine zum Auswuchten eines Rades, mit einer Antriebseinrichtung, die einen Motor (8) und eine von dem Motor (8) angetriebene Auswuchtwelle umfaßt, auf der das Rad zum Messen der Unwucht befestigt ist, einem Unwuchtsensor (4,5) zur Messung der Unwucht und einer Drehzahlregeleinrichtung (1,6) zur Regelung der Geschwindigkeit der Antriebseinrichtung, dadurch gekennzeichnet, daß die Drehzahlregeleinrichtung (1,6) einen steuerbaren Frequenzumrichter (6) und einen Rechner (1) zur Regelung des steuerbaren Frequenzumrichters umfaßt, und daß die Drehzahlregeleinrichtung (1, 6) geeignet ist, die Drehzahl der Auswuchtwelle in Abhängigkeit von einer gewählten Auswuchtqualität zu regeln, wobei, wenn die Dauer des Auswuchtvorganges kurz gehalten werden soll, die Auswuchtwelle bei niedrigen Drehzahlen anzutreiben ist, und wenn die Auswuchtqualität hoch sein soll, das Rad mit großen Drehzahlen anzuteiben ist, um ein hohes Ausgangssignal des Unwuchtsensors (4,5) zu erhalten.

2. Wuchtmaschine nach Anspruch 1, **dadurch gekennzeichnet,** daß die Drehzahlregeleinrichtung (1, 6) geeignet ist, einen Sanftanlauf und ein Sanftbremsen der Auswuchtwelle zu regeln, wobei die Drehzahl langsam gesteigert beziehungsweise verringert wird.

3. Wuchtmaschine nach Anspruch 1, **gekennzeichnet durch** eine Anzahl von Antriebseinrichtungen (8 - 11) und einer Umschalteinrichtung (12), die vom Rechner (1) steuerbar ist zur wahlweisen Verbindung der Antriebseinrichtungen (8-11) mit der Drehzahlregeleinrichtung.

4. Wuchtmaschine nach Anspruch 1, **gekennzeichnet durch** eine Anzahl von Antriebseinrichtungen (8 - 11) mit jeweiligen Drehzahlregeleinrichtungen, die vom Rechner (1) steuerbar sind.

5. Wuchtmaschine nach einem der vorangegangenen Ansprüche, **gekennzeichnet durch** eine Antriebseinrichtung (9) zum motorischen Öffnen und Schließen eines Radschutzbogens in Abhängigkeit von der Stellung des Radschutzbogens, die von der Drehzahlregeleinrichtung (1, 6) steuerbar ist.

6. Wuchtmaschine nach einem der vorangegangenen Ansprüche, **gekennzeichnet durch** eine Antriebseinrichtung (10) zum Antreiben einer Einrichtung zum Ermitteln der radspezifischen Daten, die von der Drehzahlregeleinrichtung (1, 6) steuerbar ist.

7. Wuchtmaschine nach einem der vorangegangenen Ansprüche, **gekennzeichnet durch** eine Antriebseinrichtung (11) zum Antreiben einer Einrichtung zum Anbringen von Ausgleichsgewichten am Rad, die von der Drehzahlregeleinrichtung (1, 6) steuerbar ist.

8. Wuchtmaschine nach einem der vorangegangenen Ansprüche, **dadurch gekennzeichnet,** daß die Drehzahlregeleinrichtung (1, 6) eine Einrichtung zum Überwachen der Stromaufnahme in der Antriebseinrichtung (8) bzw. den Antriebseinrichtungen (8 - 11) aufweist, so daß beim Überschreiten einer maximal zulässigen Stromaufnahme eine Notabschaltung der Antriebseinrichtungen erfolgt.

## Claims

1. A balancing machine for balancing a wheel having a drive device comprising a motor (8) and a balancing shaft driven by the motor (8), on which shaft the wheel is fixed for measuring the unbalance, an unbalance sensor (4,5) for measuring the unbalance and a speed control device (1,6) for controlling the speed of the drive device, characterized in that the speed control device (1,6) comprises a controllable frequency converter (6) and a computer (1) for controlling the controllable frequency converter, and that the speed control device (1,6) is adapted to control the speed of the balancing shaft in relation to a selected balancing quality, wherein, when the duration of the balancing run should be kept short, the balancing shaft is to be driven at low speed, and, when the balancing quality should be high, the wheel is to be driven with high speeds in order to obtain a high output signal of the unbalance sensor (4,5).

2. The balancing machine according to claim 1, characterized in that the speed control device (1, 6) is adapted to control a soft acceleration and a soft breaking down of the balancing shaft, wherein the speed is slowly increased or decreased respectively.

3. The balancing machine of claim 3, characterized by a number of drive devices (8 to 11) and a switch-over device (12) which is controllable by the computer (1) for selectively connecting the drive devices (8 to 11) to the speed control device.

4. The balancing machine of claim 1, characterized by a number of drive devices (8 to 11) with respective speed control devices which are controllable by the computer (1).

5. The apparatuses of any of the above claims, characterized by a drive device (9) for opening and closing a wheel protection bow by motor in accordance with the position of the wheel protection bow, said drive device being controllable by the speed control device (1, 6).

6. The balancing machine of any of the above claims, characterized by a drive device (10) for driving a device for determining the wheel-specific data, said drive device being controllable by the speed control device (1, 6).

7. The balancing machine of any of the above claims, characterized by a drive device (11) for driving a device for mounting balancing weights on the wheel, said drive device being controllable by the speed control device (1, 6).

8. The balancing machine of any of the above claims, characterized in that the speed control device (1, 6) has a device for monitoring the current consumption in the drive devise (8) or in the drive devices (8 to 11) respectively, so that an emergency shutdown of the drive devices takes place when a maximum admissible current consumption is exceeded.

## Revendications

1. Équilibreuse pour équilibrer une roue, avec un dispositif d'entraînement, lequel comprend un moteur (8) et un arbre d'équilibrage qui est entraîné par le moteur (8) et sur lequel la roue est fixée pour mesurer le balourd, avec un capteur de balourd (4, 5) pour mesurer le balourd et avec un dispositif de régulation de vitesse de rotation (1, 6) pour réguler la vitesse du dispositif d'entraînement, caractérisée en ce que le dispositif de régulation de vitesse de rotation (1, 6) comprend un convertisseur de fréquence commandé (6) et un calculateur (1) pour réguler le convertisseur de fréquence commandé, et en ce que le dispositif de régulation de vitesse de rotation (1, 6) est apte à réguler la vitesse de rotation de l'arbre d'équilibrage en fonction d'une qualité d'équilibrage choisie, sachant que, lorsqu'il faut que la durée de l'opération d'équilibrage soit courte, l'arbre d'équilibrage doit être entraîné à des vitesses de rotation basses et, lorsqu'il faut que la qualité d'équilibrage soit élevée, la roue doit être entraînée à de grandes vitesses de rotation pour obtenir un signal fort à la sortie du capteur de balourd (4, 5).

2. Équilibreuse selon la revendication 1, caractérisée en ce que le dispositif de régulation de vitesse de rotation (1, 6) est apte à produire un démarrage en douceur et un freinage en douceur de l'arbre d'équilibrage, la vitesse de rotation étant alors augmentée et, respectivement, réduite lentement.

3. Équilibreuse selon la revendication 1, caractérisée par une pluralité de dispositifs d'entraînement (8 à 11) et par un dispositif de commutation (12), lequel est commandé par le calculateur (1) pour connecter sélectivement les dispositifs d'entraînement (8 à 11) au dispositif de régulation de vitesse de rotation.

4. Équilibreuse selon la revendication 1, caractérisée par une pluralité de dispositifs d'entraînement (8 à 11) comprenant des dispositifs de régulation de vitesse de rotation respectifs qui sont entraînés par le calculateur (1).

5. Équilibreuse selon une des revendications précédentes, caractérisée par un dispositif d'entraînement (9), commandé par le dispositif de régulation de vitesse de rotation (1, 6), pour l'ouverture et la fermeture motorisées d'un capot protecteur de roue en fonction de la position du capot protecteur de roue.

6. Équilibreuse selon une des revendications précédentes, caractérisée par un dispositif d'entraînement (10), commandé par le dispositif de régulation de vitesse de rotation (1, 6), pour l'entraînement d'un dispositif d'enregistrement des données spécifiques à chaque roue.

7. Équilibreuse selon une des revendications précédentes, caractérisée par un dispositif d'entraînement (11), entraîné par le dispositif de régulation de vitesse de rotation (1, 6), pour l'entraînement d'un dispositif de pose de masselottes d'équilibrage.

8. Équilibreuse selon une des revendications précédentes, caractérisée en ce que le dispositif de régulation de vitesse de rotation (1, 6) comporte un dispositif pour surveiller la consommation de courant dans le dispositif d'entraînement (8) ou, respectivement, dans les dispositifs d'entraînement (8 à 11), de façon qu'un arrêt d'urgence des dispositifs d'entraînement ait lieu en cas de dépassement d'une consommation de courant maximale autorisée.
